(19) **Europäisches Patentamt / European Patent Office / Office européen des brevets**

(11) **EP 3 975 050 A1**

(12) **EUROPEAN PATENT APPLICATION**

(43) Date of publication:
**30.03.2022 Bulletin 2022/13**

(21) Application number: **20198703.9**

(22) Date of filing: **28.09.2020**

(51) International Patent Classification (IPC):
**G06N 3/00** *(2006.01)*     **G06N 5/02** *(2006.01)*

(52) Cooperative Patent Classification (CPC):
**G06N 3/004; G06N 5/02**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft 80333 München (DE)**

(72) Inventors:
- **Hildebrandt, Marcel 80634 München (DE)**
- **Mogoreanu, Serghei 81827 München (DE)**

(54) **METHOD AND SYSTEM FOR EVALUATING CONSISTENCY OF AN ENGINEERED SYSTEM**

(57) A graph database (GDB) stores a knowledge graph (G), with nodes of the knowledge graph (G) corresponding to components of an engineered system and edges of the knowledge graph (G) specifying connections between the components. A reasoning module (RM) is equipped with a first agent (A1) and a second agent (A2). The agents have been trained with opposing goals and extract paths from the knowledge graph (G) beginning with a node that corresponds to a first component of the engineered system. A prediction module (PM) uses a classifier (C) to classify the extracted paths in order to produce a classification result (CRT), which indicates consistency, and in particular compatibility, of the first component in relation to the engineered system. This information is provided to an engineer, supporting him in validating the engineered system, for example an industrial automation solution. The method and system provide an automated data-driven algorithm that leverages a large collection of historical examples for consistency checking of components. In contrast to black-box machine learning techniques, predictions are given along with interpretable explanations in the form of the extracted paths that point the engineer to the part of the system where the issues arise. In critical applications, interpretable explanations are highly preferred over predictions made by a black box.

FIG 1

**Description**

An engineered system, for example an industrial automation solution, is a complex system that consists of a multitude of individual components, the interplay of which fulfills functional requirements arising from an intended application. Due to the number of criteria that one needs to consider, configuring such a system is a very laborious task that requires a vast amount of domain-specific knowledge and is prone to mistakes. In addition, it is not uncommon to revise a previously configured automation solution due to one of the following reasons:

- Change in functional or non-functional requirements towards the automation solution,
- Change in a company's automation solution design practices,
- Large number of issues that indicate a flaw in the original design,
- Release of a better suited component.

It is an object of the invention to provide a method and system for evaluating consistency of an engineered system in order to facilitate configuration and/or reconfiguration of the engineered system.
According to the computer implemented method for evaluating consistency of an engineered system, the following operations are performed by one or more processors:

- providing, by one or more of the processors accessing a graph database, a knowledge graph, with nodes of the knowledge graph corresponding to components of the engineered system and edges of the knowledge graph specifying connections between the components, and with the knowledge graph also containing nodes and edges describing other systems that are similar to the engineered system,
- executing, by one or more of the processors, a first agent and a second agent, with the first agent and the second agent being reinforcement learning agents that have been trained with opposing goals to extract paths from the knowledge graph,
- extracting a first path, by the first agent, and a second path, by the second agent, from the knowledge graph, with the first path and the second path beginning with a node that corresponds to a first component of the engineered system,
- classifying, by one or more of the processors executing a classifier, the first path and the second path and producing a classification result, which indicates consistency, and in particular compatibility, of the first component in relation to the engineered system, and
- outputting, by one or more of the processors accessing an output device, the classification result as well as the first path and/or the second path.

The system for evaluating consistency of an engineered system comprises:

- a graph database, storing a knowledge graph, with nodes of the knowledge graph corresponding to components of the engineered system and edges of the knowledge graph specifying connections between the components, and with the knowledge graph also containing nodes and edges describing other systems that are similar to the engineered system,
- a reasoning module with a first agent and a second agent, configured for processing the knowledge graph, with the first agent and the second agent being reinforcement learning agents that have been trained with opposing goals to extract paths from the knowledge graph, and with the reasoning module being configured for extracting a first path, by the first agent, and a second path, by the second agent, from the knowledge graph, with the first path and the second path beginning with a node that corresponds to a first component of the engineered system,
- a prediction module, containing a classifier that has been trained to classify the first path and the second path in order to produce a classification result, which indicates consistency, and in particular compatibility, of the first component in relation to the engineered system, and
- one or more processors and an output device, configured for outputting the classification result as well as the first path and/or the second path.

The following advantages and explanations are not necessarily the result of the object of the independent claims. Rather, they may be advantages and explanations that only apply to certain embodiments or variants.
The method and system, or at least some of their embodiments, support an engineer in validating an existing engineered system, for example an industrial automation solution.
Any detected lack of consistency could be based on and highlight various inconsistencies, such as (i) incompatibility with the rest of the engineered system, (ii) abnormal choices of components, or (iii) components for which a better suited alternative exists.

The method and system, or at least some of their embodiments, could be used to not only increase the overall quality of the engineered system (while making the process of validating the choices made by their designers more efficient), but also to enable systematic knowledge transfer between more and less experienced engineers.

The method and system, or at least some of their embodiments, provide an automated data-driven algorithm that leverages a large collection of historical examples for consistency checking of components that constitute a complex engineered system, and that can naturally be represented in the form of a graph. In contrast to black-box machine learning techniques, explainable predictions are given that point the user to the part of the system where the issues arise.

The method and system, or at least some of their embodiments, are applicable to a wide variety of industrial configuration software, supporting engineers in detecting each of the different types of inconsistencies described earlier, so that they can ensure compatibility of the components within an industrial automation solution.

The method and system, or at least some of their embodiments, provide a data-driven and automated approach for validating complex engineered systems with the benefit of interpretable explanations for the given output. In comparison to rule-based systems, much less manual effort is required to formalize and subsequently maintain the experts' knowledge. In other words, the method and system, or at least some of their embodiments, can be easily scaled for use cases with a large selection of available components.

In contrast to typical machine learning methods, the proposed solution is capable of providing interpretable explanation for the predictions it is making, which is highly valuable for any application area, and can be essential for some. In critical applications, interpretable explanations are highly preferred over predictions made by a black box.

According to an embodiment of the method, the extracting and classifying of a first path and a second path are performed for each component of the engineered system. For each component, the outputting of the classification result as well as the respective first path and/or second path is performed only if the classification result indicates a level of consistency for the component that is below a threshold.

An embodiment of the method comprises the initial steps of selecting the other systems based on a computation of components that the other systems share with the engineered system, in particular by computing a Jaccard coefficient, and including nodes and edges describing the other systems in the knowledge graph.

An embodiment of the method comprises the initial steps of training the first agent with a reward that is positively correlated to the classification result, and, in particular simultaneously, training the second agent with a reward that is negatively correlated to the classification result. In particular, the first agent, the second agent and the classifier are trained simultaneously in an end-to-end training procedure.

In another embodiment of the method and system, the extraction of the first path, by the first agent, and the second path, by the second agent, is performed via sequential decision making.

In a further embodiment of the method and system, a decision problem of the first agent and the second agent is modelled as a Markov decision process.

In a further embodiment of the method and system, each action of the first agent and the second agent corresponds to a transition from one node in the knowledge graph to an adjacent node.

In another embodiment of the method and system, the engineered system is an industrial automation solution.

The computer-readable storage media have stored thereon instructions executable by one or more processors of a computer system, wherein execution of the instructions causes the computer system to perform the method.

The computer program is being executed by one or more processors of a computer system and performs the method.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following Figures:

Fig. 1    shows a possible exemplary embodiment of a system for evaluating consistency of an engineered system,

Fig. 2    shows a flowchart of a possible exemplary embodiment of a method for evaluating consistency of an engineered system, and

Fig. 3    shows a pseudocode of the workflow shown in Fig. 2.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

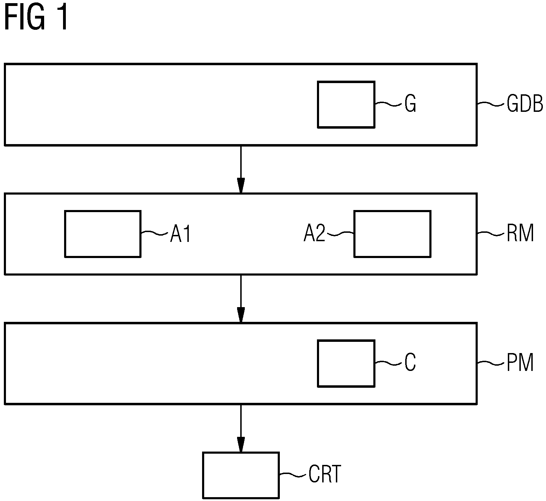

Fig. 1 shows an embodiment of a system for evaluating consistency of an engineered system.

This embodiment describes the technical features of a data-driven, automated system that evaluates the compatibility of components of an engineered system. The engineered system is consistent if all of its components are found to be compatible.

For our purposes, an engineered system is given by a heterogeneous system graph $\hat{G}$ represented as a list of triples. That means

$$\hat{G} \subset E \times R \times E,$$

where $E$ denotes the vertex set and $R$ the set of edge types.

The vertices correspond to the configured components of the engineered system and the edge types specify how a pair of components is connected to each other. For example, a triple

$$(SiplusRack - 4200, \ attached - left - slot, \ \mathrm{SIPLUS} - \mathrm{CIM4210}) \in \hat{G}$$

contains the information that the *Siplus* - **4200** rack and the central interface module **SIPLUS** - **CIM4210** are configured. Moreover, the edge type specifies that the central interface module is attached to the left slot of the rack.

We define a knowledge graph $G$ that contains not only the engineered system of interest, given by the system graph $\hat{G}$ defined above, but also a number of similar historical examples of other engineered systems. Those similar engineered systems should be selected based on some criterion. One possibility is to select historical engineered systems that share common items with the system graph $\hat{G}$ (i.e., select engineered systems with the highest Jaccard coefficient).

In addition, the knowledge graph $G$ contains triples of the form (*component, feature name, feature value*), that describe each of the components belonging to either of the included engineered systems on a technical level. As an example, a triple

$$(S7 - 1500 \, PM1507, \ maximum \ current, \ 25A) \in G$$

contains the information that the power supply component S7-1500 PM1507, belonging to one of the engineered systems contained in the knowledge graph $G$, is rated for a maximum of 25A of current.

Fig. 1 shows the knowledge graph $G$ being stored in a graph database GDB.

A reasoning module RM processes the knowledge graph $G$ and frames the task of consistency checking as a debate game between two reinforcement learning agents. Concretely, two competing reinforcement learning agents, a first agent A1 and a second agent A2, take a component $e_i \in E$ from the system graph $\hat{G}$ as input and extract paths starting from $e_i$. These paths serve as features for a classification that predicts whether the component is compatible or incompatible. Thereby, the first agent A1 is supposed to extract paths that should serve as evidence that the component is compatible and the second agent A2 for the opposite position.

A classifier C is part of a prediction module PM and receives the paths that the first agent A1 and the second agent A2 have extracted from the knowledge graph $G$. The classifier C is trained in a supervised fashion to produce a score $s(e_i)$ as a classification result CRT that indicates the compatibility of the component $e_i$. High classification scores correspond to compatible components.

The task of the first agent A1 and the second agent A2 is more complicated since extracting predictive paths in the knowledge graph $G$ involves sequential decision making. For our purpose, the decision problem of the first agent A1 and the second agent A2 is modelled in terms of a Markov decision process (MDP). Starting from a component node $e_i \in E$, the objective of each agent is to extract a path in the knowledge graph $G$ that serves as evidence for the agent's position. The agents' continuous state spaces are derived from a node embedding that encode the current location of the agent. Thus, the state space representation should guide the respective agent to sample transitions that allow to extend the path in the most promising way. An action corresponds to a transition from one node in the knowledge graph $G$ to an adjacent one. After an action is sampled from a policy network of the respective agent the location of the respective agent and the state representation is updated accordingly.

The reward to each agent is computed based on the effect that an extracted path has on the decision of the classifier C. For example, if the first agent A1 extracts a path that leads to a high classification score $s(e_i)$, the first agent A1 receives a high reward. The rationale is that the extracted path supports the position that $e_i$ is compatible. Similarly, the rewards for the second agent A2 is inverse proportional to the classification score. During training the agents maximize their expected rewards using optimization methods such as REINFORCE.

The described embodiment can be integrated into an engineering configuration software assisting a user to pick appropriate components such that the whole system is functional.

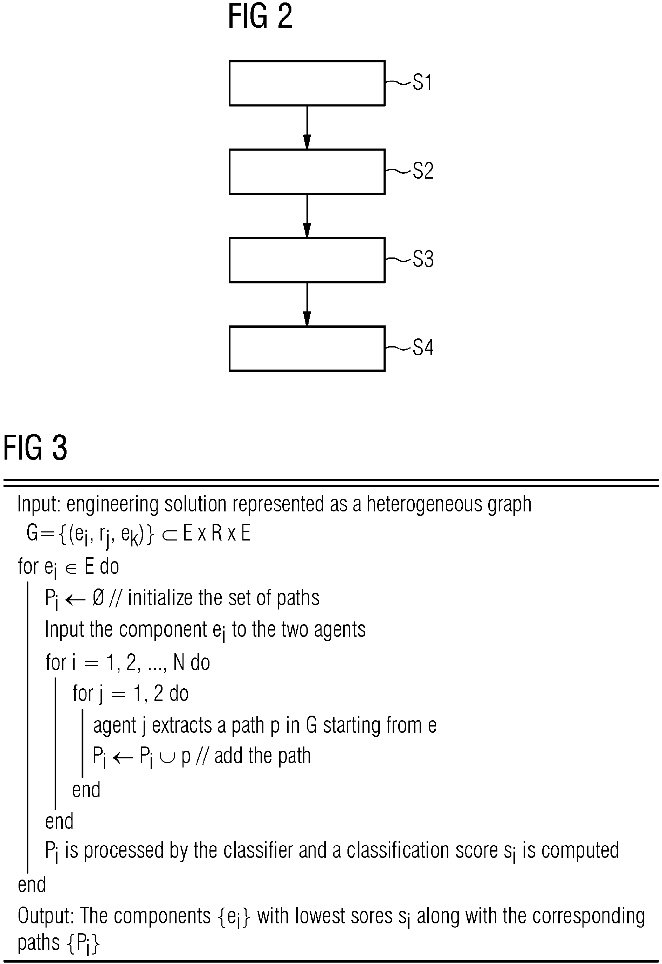

Figure 2 shows a workflow for evaluating consistency of an engineered system.

In a configuration step S1, a user configures an engineered system by selecting components and specifying their connections. This configuration process results in the system graph $\hat{G}$.

In a graph building step S2, the knowledge graph $G \supset \hat{G}$ is built according to the procedure described with regard to Fig. 1.

In a reasoning step S3, the reasoning module RM shown in Fig. 1 takes the knowledge graph $G$ as input and iterates over the configured components (i.e., the vertex set), i.e. for every component the first agent A1 and the second agent A2 take turns debating whether the component is compatible or not.

In a subsequent prediction step S4, the paths generated by the first agent A1 and the second agent A2 are input to the prediction module PM which classifies whether the component at hand is compatible or not. If a component is classified as incompatible it is shown to a user along with the extracted paths. In other words, the extracted paths (that act as an interpretable argument for the prediction) are output to the user. The user can then examine the extracted paths and decide to revise the engineered system (i.e., choose other components or connect them differently) and run the reasoning module RM again.

Fig. 3 shows a pseudocode of the workflow shown in Fig. 2.

Referring again to Fig. 1, it is now discussed how the classifier C as well as the first agent A1 and the second agent A2 can be trained. The training data set T consists of historical engineered systems that were configured in the past. That means, $T = \{(G_1,X_1),(G_2,X_2),...,(G_T,X_T)\}$ where each graph $G_i$ corresponds to a graph representation of a previous engineering project and each list $X_i$ is a list of components that are incompatible with the remainder of the components.

There are different ways to create the training data set T. In particular, the negative sample points provided by the lists $X_i$ require additional care. Among other possibilities, one could manually select the entries of each list $X_i$ (i.e., a domain expert is selecting engineering components which are known to be incompatible), randomly sample each list $X_i$ (based on the assumption that randomly configuring a component at a random position will most likely lead to inconsistencies; however, this might lead to so-called false-negatives), or define a set of (possibly non-exhaustive) rules that specify when components are consistent and generate each list $X_i$ accordingly.

Our goal is to classify the components in each list $X_i$ as incompatible and the remainder of the components as compatible. The supervision signal given by each list $X_i$ is used to train the classifier C. The decisions of the classifier C in turn produce reward signals for the first agent A1 and the second agent A2. The whole architecture can be trained end-to-end.

When the training process is completed the performance is evaluated on a validation set that is similar to the training data set T but contains instances of engineered systems and incompatible components that were not encountered during training.

The method can be executed by a processor such as a microcontroller or a microprocessor, by an Application Specific Integrated Circuit (ASIC), by any kind of computer, including mobile computing devices such as tablet computers, smartphones or laptops, or by one or more servers in a control room or cloud. For example, a processor, controller, or integrated circuit of the computer system and/or another processor may be configured to implement the acts described herein.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non- volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

**Claims**

1. A computer implemented method for evaluating consistency of an engineered system, comprising the following operations performed by one or more processors:

   - providing, by one or more of the processors accessing a graph database (GDB), a knowledge graph (G), with nodes of the knowledge graph (G) corresponding to components of the engineered system and edges of the knowledge graph (G) specifying connections between the components, and with the knowledge graph (G) also containing nodes and edges describing other systems that are similar to the engineered system,
   - executing, by one or more of the processors, a first agent (A1) and a second agent (A2), with the first agent (A1) and the second agent (A2) being reinforcement learning agents that have been trained with opposing goals to extract paths from the knowledge graph (G),
   - extracting a first path, by the first agent (A1), and a second path, by the second agent (A2), from the knowledge graph (G), with the first path and the second path beginning with a node that corresponds to a first component of the engineered system,
   - classifying, by one or more of the processors executing a classifier (C), the first path and the second path and producing a classification result (CRT), which indicates consistency, and in particular compatibility, of the first component in relation to the engineered system, and
   - outputting, by one or more of the processors accessing an output device, the classification result (CRT) as well as the first path and/or the second path.

2. The method of claim 1, wherein

   - the extracting and classifying of a first path and a second path are performed for each component of the engineered system, and
   - for each component, the outputting of the classification result (CRT) as well as the respective first path and/or second path is performed only if the classification result (CRT) indicates a level of consistency for the component that is below a threshold.

3. The method according to any of the preceding claims,
   with the initial steps of

   - selecting the other systems based on a computation of components that the other systems share with the engineered system, in particular by computing a Jaccard coefficient, and
   - including nodes and edges describing the other systems in the knowledge graph (G).

4. The method according to any of the preceding claims,
   with the initial steps of

   - training the first agent (A1) with a reward that is positively correlated to the classification result (CRT), and, in particular simultaneously,
   - training the second agent (A2) with a reward that is negatively correlated to the classification result (CRT).

5. The method according to claim 4,

   - wherein the first agent (A1), the second agent (A2) and the classifier (C) are trained simultaneously in an end-to-end training procedure.

6. The method according to any of the preceding claims,

   - wherein extracting the first path, by the first agent (A1), and the second path, by the second agent (A2), is performed via sequential decision making.

7. The method according to claim 6,

   - wherein a decision problem of the first agent (A1) and the second agent (A2) is modelled as a Markov decision process.

8. The method according to claim 6 or 7,

   - wherein each action of the first agent (A1) and the second agent (A2) corresponds to a transition from one node in the knowledge graph (G) to an adjacent node.

9. The method according to any of the preceding claims,

   - wherein the engineered system is an industrial automation solution.

10. A system for evaluating consistency of an engineered system, comprising:

    - a graph database (GDB), storing a knowledge graph (G), with nodes of the knowledge graph (G) corresponding to components of the engineered system and edges of the knowledge graph (G) specifying connections between the components, and with the knowledge graph (G) also containing nodes and edges describing other systems that are similar to the engineered system,
    - a reasoning module (RM) with a first agent (A1) and a second agent (A2), configured for processing the knowledge graph (G), with the first agent (A1) and the second agent (A2) being reinforcement learning agents that have been trained with opposing goals to extract paths from the knowledge graph (G), and with the reasoning module (RM) being configured for extracting a first path, by the first agent (A1), and a second path, by the second agent (A2), from the knowledge graph (G), with the first path and the second path beginning with a node that corresponds to a first component of the engineered system,
    - a prediction module (PM), containing a classifier (C) that has been trained to classify the first path and the second path in order to produce a classification result (CRT), which indicates consistency, and in particular compatibility, of the first component in relation to the engineered system, and
    - one or more processors and an output device, configured for outputting the classification result (CRT) as well as the first path and/or the second path.

11. Computer-readable storage media having stored thereon:

    - instructions executable by one or more processors of a computer system, wherein execution of the instructions causes the computer system to perform the method according to one of the claims 1 to 9.

12. Computer program,

    - which is being executed by one or more processors of a computer system and performs the method according to one of the claims 1 to 9.

FIG 1

# FIG 2

# FIG 3

Input: engineering solution represented as a heterogeneous graph
$G = \{(e_i, r_j, e_k)\} \subset E \times R \times E$
for $e_i \in E$ do
    $P_i \leftarrow \varnothing$ // initialize the set of paths
    Input the component $e_i$ to the two agents
    for $i = 1, 2, ..., N$ do
        for $j = 1, 2$ do
            agent $j$ extracts a path $p$ in $G$ starting from $e$
            $P_i \leftarrow P_i \cup p$ // add the path
        end
    end
    $P_i$ is processed by the classifier and a classification score $s_i$ is computed
end
Output: The components $\{e_i\}$ with lowest sores $s_i$ along with the corresponding paths $\{P_i\}$

Europäisches
Patentamt

European
Patent Office

Office européen
des brevets

# EUROPEAN SEARCH REPORT

Application Number

EP 20 19 8703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARCEL HILDEBRANDT ET AL: "Reasoning on Knowledge Graphs with Debate Dynamics", ARXIV.ORG, CORNELL UNIVERSITY LIBRARY, 201 OLIN LIBRARY CORNELL UNIVERSITY ITHACA, NY 14853, 2 January 2020 (2020-01-02), XP081570721, * abstract * * Algorithm 1; page 2 - page 6; figures 1, 2 * ----- | 1,2,4-12 | INV. G06N3/00 G06N5/02 |
| A | ZHAO KANGZHI, WANG XITING, ZHANG YUREN, ZHAO LI ET AL: "Leveraging Demonstrations for Reinforcement Recommendation Reasoning over Knowledge Graphs", PROCEEDINGS OF THE 43RD INTERNATIONAL ACM SIGIR CONFERENCE ON RESEARCH AND DEVELOPMENT IN INFORMATION RETRIEVAL, ACMPUB27, NEW YORK, NY, USA, 25 July 2020 (2020-07-25), pages 239-248, XP058465207, DOI: 10.1145/3397271.3401171 ISBN: 978-1-4503-8016-4 * the whole document * ----- | 1,2,4-12 | |
| | -/-- | | |

TECHNICAL FIELDS SEARCHED (IPC)

G06N

~~The present search report has been drawn up for all claims~~

| Place of search | Date of completion of the search | Examiner |
|---|---|---|
| The Hague | 10 March 2021 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 20 19 8703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HILDEBRANDT MARCEL ET AL: "A Recommender System for Complex Real-World Applications with Nonlinear Dependencies and Knowledge Graph Context", EUROPEAN SEMANTIC WEB CONFERENCE, ESWC 2019; 16TH INTERNATIONAL CONFERENCE, ESWC 2019, PORTOROZ, SLOVENIA, JUNE 2-6, 2019, SPRINGER INTERNATIONAL PUBLISHING, CHAM, CH, vol. 11503 Chap.12, no. 558, 25 May 2019 (2019-05-25), pages 179-193, XP047514176, DOI: 10.1007/978-3-030-21348-0_12 ISBN: 9783030213480 [retrieved on 2019-05-25] * the whole document * | 1,2,4-12 | |
| A | HIMMELSTEIN DANIEL S. ET AL: "Heterogeneous Network Edge Prediction: A Data Integration Approach to Prioritize Disease-Associated Genes", PLOS COMPUTATIONAL BIOLOGY, [Online] vol. 11, no. 7, 9 July 2015 (2015-07-09), page e1004259, XP055784297, DOI: 10.1371/journal.pcbi.1004259 Retrieved from the Internet: URL:https://storage.googleapis.com/plos-corpus-prod/10.1371/journal.pcbi.1004259/1/pcbi.1004259.pdf?X-Goog-Algorithm=GOOG4-RSA-SHA256&X-Goog-Credential=wombat-sa@plos-prod.iam.gserviceaccount.com/20210304/auto/storage/goog4_request&X-Goog-Date=20210304T175650Z&X-Goog-Expires=3600&X-Goog-Signed Headers=ho> [retrieved on 2021-03-10] * the whole document * | 1,2,4-12 | TECHNICAL FIELDS SEARCHED (IPC) |

~~The present search report has been drawn up for all claims~~

| Place of search | Date of completion of the search | Examiner |
|---|---|---|
| The Hague | 10 March 2021 | Tsakonas, Athanasios |

EPO FORM 1503 03.82 (P04C01)

Europäisches
Patentamt
European
Patent Office
Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

```
see sheet B
```

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

```
1, 2, 4-12
```

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
### SHEET B

Application Number

EP 20 19 8703

The Search Division considers that the present European patent application does not comply with the requirements of unity of invention and relates to several inventions or groups of inventions, namely:

1. claims: 1, 2, 4-12

    Method and apparatus for evaluating consistency of an engineered system.
    ---

2. claim: 3

    Method for evaluating consistency of an engineered system and for selecting systems for integration based on their similarity.
    ---